# EUROPEAN PATENT APPLICATION

(11) **EP 3 528 138 A1**
(43) Date of publication of application: **21.08.2019**
(21) Application number: 18020060.2
(22) Date of filing: 14.02.2018
(51) Int. Cl.: G06F 17/27, G10L 15/18

(54) **METHOD AND APPARATUS FOR LOCATION RECOGNITION**

(71) Applicant: Dr. Ing. h.c. F. Porsche AG, 70435 Stuttgart (DE)
(72) Inventor: Foligno, Mark, 10245 Berlin (DE)

(57) **Abstract**

The invention provides a method of location recognition characterized in that during a telephonic conversation (11) among multiple parties (21, 22, 23), a natural language processing service (25) listens in to the conversation (11), and the service (25) detects an appointment by at least some of the parties (21, 22, 23) to convene at a specific venue (29).

The invention further provides a corresponding data processing apparatus, corresponding computer program, and medium.

## Description

The present invention pertains to a method of location recognition. The invention further relates to a corresponding data processing apparatus, corresponding computer program, and medium.

### Background art

Natural language processing (NLP) is a field of computer science, artificial intelligence, and computational linguistics concerned with the interactions between computers and human (natural) languages and programming computers to fruitfully process large natural language corpora. Challenges in NLP frequently involve speech recognition, natural language understanding, natural language generation such as from formal, machine-readable logical forms, connecting language and machine perception, dialog systems, or some combination thereof.

Representatively, US6850766B2 discloses a voice-activated wireless locator service that provides an interactive voice response system whereby a user is walked through a sequence of voice prompts to select a desired destination. Using either geo-coded information provided during the voice call or speech recognition of a shortcut phrase associated in a database with a street address, and using a locator service database, the system of US6850766B2 then provides spoken instructions using a text-to-speech engine, providing the name, location, and driving directions to one or more destinations matching the criteria provided by the user.

WO2016094335A1, US2015228281A1, WO2009022446A1, EP1603318A2, US2003158739A1, US2017167884A1, JP2002048572A, US6757718B1, and US6314365B1 discuss similar natural language processing systems that allow a user to specify a destination using spoken language, then direct her to the desired destination. Some of these systems are suitable or specifically destined for vehicular use.

### Disclosure of the invention

The invention provides a method of location recognition, a corresponding data processing apparatus, corresponding computer program, and corresponding medium as per the independent claims.

Embodiments of the invention are set out in the dependent claims.

### Brief description of drawings

Figure 1 is a state diagram of a preferred embodiment of the invention.
Figure 2 shows a typical scenario wherein the invention is employed.

### Embodiment of the invention

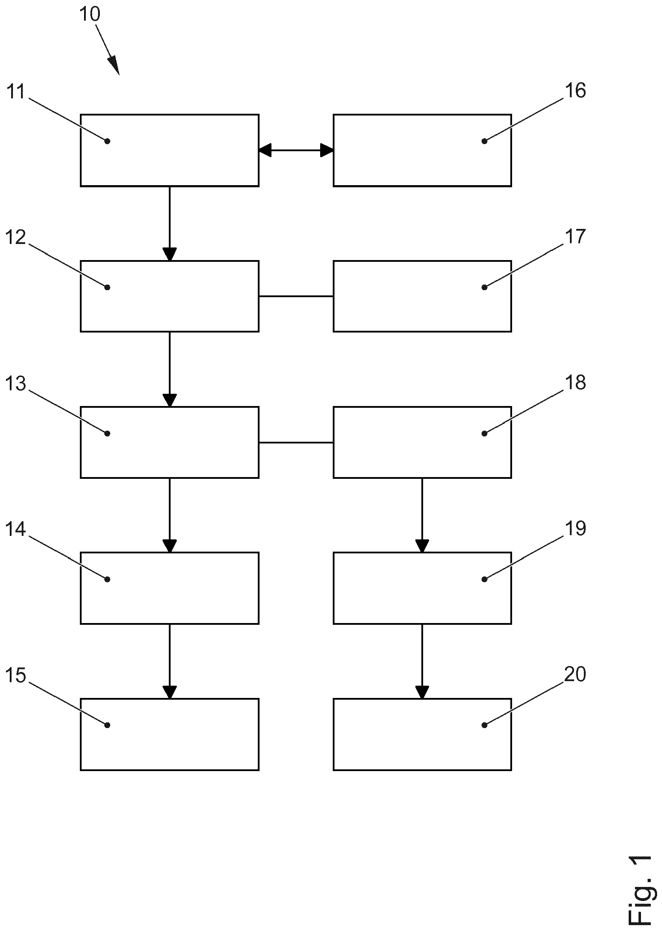

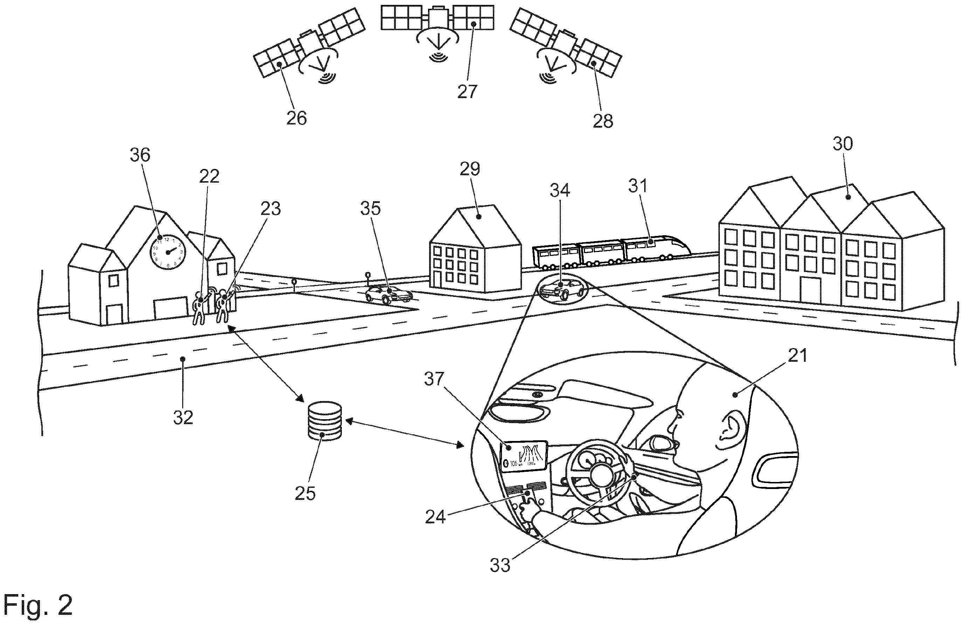

Figure 1 illustrates the functional aspects of an embodiment of the invention which shall now be elucidated referring to the use case of Figure 2.

During a telephonic conversation (11) between two or more parties (21, 22, 23), there is agreement between the parties (21, 22, 23) to meet at the current location of one among them. Using an NLP-based service (25), the meet-up goal or venue (29) is recognized (12) by the service (25), which is listening (16) to the conversation (11). If the request by one participant (21, 22, 23) is to "let's meet at my current location at 3 p.m." (18), then the service (25), having access to the GPS location of each participant (21, 22, 23), leverages a location-based platform (13) to determine how they would reach this GPS location and shares this information with each participant (21, 22, 23), thus facilitating how they attain the intended destination (15). An additional tie-in to a mobility service provider (35) can help expedite the end-to-end (E2E) experience.

If the request by one participant (21, 22, 23) refers to a specific venue (29), such as when prompting to "let's meet at Cafe Oslo at 3 p.m." (17), then, using NLP to extrapolate the location, this is linked to a location-based platform to determine the actual location and alternative means (31, 32) to reach the intended destination (17). Again, an additional tie-in to a mobility service provider (35) can help expedite the E2E experience.

If the request by one participant (21, 22, 23) was to "let's meet at Cafe Oslo at 3 p.m. tomorrow", then the service (25) would schedule a calendar appointment with a reminder (20) based upon the time (36) it may take to reach that location based upon the predicted future location of the specific participant (21, 22, 23). For example, it may be deductible from her calendar that the participant (21, 22, 23) is going to spend the following day at work (30), allowing the service (25) to remind her of departing from that location in time (36) to get to the agreed-upon destination (29).

## Claims

1. Method (10) of location recognition,
**characterized in that**
- during a telephonic conversation (11) among multiple parties (21, 22, 23), a natural language processing service (25) listens (16) in to the conversation (11), and
- while listening (16), the service (25) detects (12) an appointment by at least some of the parties (21, 22, 23) to convene at a specific venue (29).

2. Method (10) as per claim 1,
**characterized in that**,
- upon detecting (12) the request, the service (25) connects to a location platform to determine (13) a location of the given venue (29).

3. Method (10) as per claim 2,
**characterized in that**
- when the conversation (11) ends, having determined (13) the location, the service (25) shares (14) the location with any participants (21, 22, 23) in the appointment among the parties (21, 22, 23).

4. Method (10) as per claim 3,
**characterized in that**,
- the location having been shared (14), the location platform is used to navigate (15) the participants (21, 22, 23) to the agreed-upon venue (29) by preferred means of transport such as a car (34), public transport (31), or on foot.

5. Method (10) as per claim 3 or 4,
**characterized in that**
- if, when making the appointment, a speaker among the participants (21, 22, 23) refers to her position, a preferred device such as a smartphone (24), automotive navigation system (37), or smartwatch (33) of the speaker determines (18) the position by means of a radionavigation-satellite service (26, 27, 28) such as GPS.

6. Method (10) as per any of claim 5,
**characterized in that**
- if the speaker further refers to a specific time (36), the position of the speaker at that time (36) is extracted (19) from a calendar of the speaker.

7. Method (10) as per claim 6,
**characterized in that**,
- having determined (18, 19) the time (36) and position, the service (25), for each among the participants (21, 22, 23), schedules (20) the appointment in the respective participant's calendar and preferably reminds the participant (21, 22, 23) of timely departure.

8. Data processing apparatus (25) having means for carrying out the method (10) as per any of claims 1 through 7.

9. Computer program adapted to perform the method (10) as per any of claims 1 through 7.

10. Computer-readable medium having stored thereon the program as per claim 9.
